# EUROPÄISCHE PATENTSCHRIFT

(11) **EP 1 393 013 B1**
(45) Veröffentlichungstag und Bekanntmachung des Hinweises auf die Patenterteilung: **28.09.2005**
(21) Anmeldenummer: 02769480.1
(22) Anmeldetag: 13.05.2002
(51) Int. Cl.: G01B 7/06, G01B 7/12, G01B 7/28

(54) **BRENNSTABPRÜFGERÄT**
TESTING APPARATUS FOR FUEL ROD
OUTIL DE TEST POUR CRAYON COMBUSTIBLE

(30) Priorität: 17.05.2001 DE 10123975
(43) Veröffentlichungstag der Anmeldung: 03.03.2004
(73) Patentinhaber: Framatome ANP GmbH, 91058 Erlangen (DE)
(72) Erfinder: BUSCH, Alexander, 91058 Erlangen (DE); ZULEGER, Jürgen, 91094 Langensendelbach (DE); DITTKUHN, Klaus, 91334 Hemhofen (DE); SCHUMANN, Rainer, 91052 Erlangen (DE)
(74) Vertreter: Tergau & Pohl Patentanwälte
(86) Internationale Anmeldenummer: PCT/EP2002/005217
(87) Internationale Veröffentlichungsnummer: WO 2002/093105

(56) Entgegenhaltungen:
- US-A- 3 884 076
- US-A- 4 722 142
- US-A- 5 124 641

## Beschreibung

Die Erfindung betrifft ein Brennstabprüfgerät.

In einer kerntechnischen Anlage, insbesondere in einem Kernkraftwerk, wird üblicherweise zur Erzeugung elektrischer Energie spaltbares Material einer kontrollierten Kernspaltung unterzogen. Das spaltbare Material ist dabei in einer Anzahl von Brennstäben vorgehalten, in denen das Material, beispielsweise in Form von sogenannten Pellets, von geeigneten Hüllrohren umgeben ist. Eine Mehrzahl derartiger Brennstäbe ist dabei üblicherweise zu einem Brennelement zusammengefaßt, wobei auch bei dauerhaftem Betrieb der kerntechnischen Anlage die Einhaltung einer vorgegebenen Geometrie und insbesondere die Einhaltung vorgesehener Abstände zwischen den Brennstäben eines Brennelements durch geeignete Abstandshalter sichergestellt ist.

Beim Betrieb einer derartigen kerntechnischen Anlage sind die jeweiligen Komponenten oder Einbauteile, Alterungsprozessen, wie beispielsweise einer Korrosion, unterworfen. Darüberhinaus sind derartige Komponenten auch längerfristig einer radioaktiven Strahlung ausgesetzt, was zusätzlich zu den üblichen alterungsbedingten Korrosions- oder Ermüdungseffekten zu Form- oder Dimensionsveränderungen führen kann. Dies kann wiederum eine Beeinträchtigung der Leistungsfähigkeit oder Zuverlässigkeit der jeweiligen Komponente bedingen. Gerade beim Einsatz von Brennstäben können derartige alterungsbedingte Effekte zu einem sogenannten Aufkriechen führen, wobei der betroffene Brennstab unter anderem seinen Durchmesser ändert. Darüberhinaus kann aber auch in der Art einer Korrosion eine Oxidation an der Oberfläche eines Brennstabs auftreten, wobei sich eine mehr oder weniger durchgängige Oxidschicht auf der Oberfläche des Brennstabs bilden kann. Je nach Dicke der sich bildenden Oxidschicht kann eine Beeinträchtigung der Rohrwanddicke des darunter liegenden Hüllrohres bis unterhalb einer noch als zulässig für den weiteren Betrieb des Brennstabs eingestuften Grenzwanddicke auftreten. Beide Effekte, also die Form- oder Dimensionsveränderungen einerseits und die Bildung von Oxidschichten andererseits, können somit gemeinsam oder auch jeweils für sich zu einer Beeinträchtigung der Zuverlässigkeit und Funktionstüchtigkeit des jeweiligen Brennstabs führen.

Aus diesem Grund ist üblicherweise in der Art einer regelmäßigen Wartung eine Überprüfung von Einbauteilen in einer kerntechnischen Anlage auf das Auftreten dieser Effekte vorgesehen. Unter Einbauteil ist dabei insbesondere ein Brennstab, ein Brennelementkasten, ein Abstandshalter oder ein sonstiges Strukturteil in der kerntechnischen Anlage zu verstehen. Bei einer derartigen Überprüfung wird einerseits stichprobenartig eine Messung an einigen der Einbauteile daraufhin vorgenommen, ob eine signifikante Veränderung im Brennstabdurchmesser aufgetreten ist. Ebenso werden die jeweiligen Einbauteile einer stichprobenartigen Messung auf Form- und Dimensionsveränderungen unterzogen. Für diese Wartungs- und Prüfmessungen kommen speziell angefertigte Tastsensoren zum Einsatz, mit denen stichprobenartig Meßdaten für ausgewählte Einbauteile, insbesondere ausgewählte Brennstäbe, gewonnen werden.

Unabhängig davon erfolgt andererseits ebenfalls in regelmäßigen Wartungsintervallen eine stichprobenartige Untersuchung der Einbauteile darauf, ob und in welchem Maße sich Oxidschichten gebildet haben. Aus diesen Meßergebnissen wird auf den Alterungszustand dieser Komponenten geschlossen, wobei insbesondere bedarfsweise eine Erneuerung einzelner oder aller Brennstäbe eingeleitet werden kann. Zur Ermittlung der einschlägigen Meßdaten sind ebenfalls spezifisch konstruierte Meßeinrichtungen im Einsatz, bei denen über eine geeignete Meßsonde Meßdaten zur Schichtdicke der Oxidschicht an ausgewählten Brennstäben oder sonstigen Einbauteilen ermittelt werden.

Eine derartige Ermittlung von Informationen bezüglich des Alterungszustandes des jeweiligen Einbauteils, insbesondere der Brennstäbe oder Abstandshalter, ist jedoch vergleichsweise aufwendig. Insbesondere können durch die genannten Messungen Stillstandszeiten der kerntechnischen Anlage bedingt sein, die bereits aus wirtschaftlichen Gründen besonders kurz gehalten werden sollen. Um dabei vergleichsweise kurze Stillstandszeichen einzuhalten, kann es erforderlich sein, die stichprobenartigen Messungen auf eine vergleichsweise geringe Anzahl der zu vermessenden Bauteile, insbesondere Brennstäbe oder Abstandshalter, zu beschränken, so daß die für eine zuverlässige Auswertung zur Verfügung stehende Datenbasis vergleichsweise gering ist. Dies kann seinerseits zu inakzeptabler Ungenauigkeit bei einer Zustandsbestimmung der Brennelemente und insbesondere für eine Prognose des zukünftigen alterungsbedingten Verhaltens der Brennelemente führen.

Bekannte Vorrichtungen werden in US-5 124 641, US 3 884 076 und US 4 722 142 offenbart.

Der Erfindung liegt daher die Aufgabe zugrunde, ein Brennstabrüfgerät anzugeben, mit dem auf besonders einfache Weise und in kurzer Meßzeit die Erhebung einer vergleichsweise großen, für den Alterungszustand der Brennelemente insgesamt repräsentativen Datenbasis ermöglicht ist. Zudem soll eine für den Einsatz bei der Vermessung eines derartigen Einbauteils, insbesondere eines Brennstabs und/oder Abstandshalters, besonders geeignete Meßeinrichtung angegeben werden. Die Aufgabe wird durch die in Anspruch 1 genannte Vorrichtung gelöst.

Die Erfindung geht dabei von der Überlegung aus, daß eine besonders effektive und somit zeitgünstige Datenerhebung bei der Bestimmung des Alterungszustands des jeweiligen Einbauteils ermöglicht ist, indem eine zusammengefaßte Ermittlung an sich verschiedener Meßwerte erfolgt. Dazu ist der Meßkopf in der Art einer kombinierten Ausführung mit verschiedenartigen Meßsonden ausgestattet, die eine gleichzeitige Ermittlung verschiedenartiger Daten am zu untersuchenden Einbauteil erlauben. Die Meßsonden sind dabei zur Erhebung der für die gewünschte Information hinsichtlich des Alterungszustands des Einbauteils relevanten Daten ausgebildet, wobei einerseits zur Ermittlung eine an der Oberfläche des jeweils zu untersuchenden Objekts in mechanischem Kontakt entlangführbare Tastspitze und andererseits eine Meßsonde zur Ermittlung der Schichtdicke einer Oxidschicht vorgesehen ist.

Um mit vergleichsweise einfachen Mitteln eine zuverlässige Bestimmung der Dikke der Oxidschicht zu ermöglichen, umfaßt die Schichtdickenmeßsonde vorteilhafterweise eine mit einem Wirbelstrommeßgerät verbundene Spulenanordnung. Die Schichtdickenmeßsonde, welche die Spulenanordnung enthält, ist dabei insbesondere zur Bestimmung der Dicke einer nicht elektrisch leitenden Schicht - nämlich vorliegend der Oxidschicht - nach dem sogenannten "Lift-Off-Effekt" ausgelegt. Bei der Ausnutzung dieses Effekts wird die Impedanzänderung in der Spule in Abhängigkeit von der Änderung des Abstands der Spulenanordnung zu einem elektrisch leitenden Meßobjekt genutzt. Als elektrisch leitendes Meßobjekt dient dabei die metallische Rohrhülle des Brennstabes bzw. das metallische Grundmaterial des jeweiligen Brennelementkastens, Abstandshalters oder sonstigen Strukturteils. Der Abstand des Grundmaterials zur Spule ist dabei einerseits durch den (konstanten) Abstand der Spulenanordnung zur Vorderkante der auf der Oberfläche der Oxidschicht entlang geführten Tastspitze und andererseits durch die zu bestimmende Schichtdicke der Oxidschicht selbst gegeben. Durch die hochfrequent betriebene Spulenanordnung wird dabei ein Wirbelstrom in der als elektrisch leitendes Meßobjekt dienenden Rohrhülle bzw. im Grundmaterial erzeugt, der seinerseits wiederum in Abhängigkeit vom Abstand eine Rückwirkung auf die Impedanz der Spule hervorruft.

In besonders vorteilhafter Ausgestaltung ist die Schichtdickenmeßsonde innerhalb des Tastergehäuses hinter der Tastspitze angeordnet. Bei einer derartigen Anordnung, bei der sich vorzugsweise die Symmetrie- oder Zentrallinie der Tastspitze mit der der Spulenanordnung deckt, ermöglichen die geometrischen Verhältnisse eine besonders eindeutige Bestimmung des Abstandsbeitrags von der Spulenanordnung zur Spitze der Tastnadel, so daß der verbleibende Betrag bei der Ermittlung des Abstands der Spulenanordnung zum elektrisch leitenden Meßobjekt auf besonders zuverlässige Weise der Schichtdicke der Oxidschicht zugeordnet werden kann. Darüberhinaus ermöglicht eine derartige Anordnung auch eine kumulative Ermittlung von Daten sowohl für den Konturverlauf über die Tastspitze als auch für den Verlauf der Schichtdicke der Oxidschicht über die Spulenanordnung auf einer gemeinsamen Meßlinie, so daß für ein und denselben örtlichen Teilbereich des jeweiligen Brennstabes oder Abstandshalters zwei Sätze von Meßdaten vorliegen. Dadurch ist eine Auswertung der Meßdaten auch im Hinblick auf eine mögliche Korrelation der gemessenen Durchmesser- oder Geometrieänderungen mit der gemessenen Schichtdicke der Oxidschicht ermöglicht. Gerade aufgrund einer derartig kombinierten Auswertung sind besonders zuverlässige Rückschlüsse auf den alterungsbedingten Zustand des jeweiligen Einbauteils ermöglicht.

Für eine besonders zuverlässige Messung des Konturparameters oder -verlaufs ist die Tastspitze vorteilhafterweise aus Diamant gefertigt, wobei insbesondere die vergleichsweise große Härte dieses Materials günstige Verschleißeigenschaften der Tastspitze bedingt.

Bezüglich der Meßeinrichtung, die besonders zur Vermessung eines Brennstabs, eines Brennelementkastens oder eines Abstandshalters geeignet ist, wird die genannte Aufgabe gelöst mit einem an einem Trägerkörper angeordneten Tastarm, der an einem freien, seitlich auslenkbaren Ende einen Meßkopf der genannten Art trägt. Eine derartige Meßeinrichtung ermöglicht auf besonders einfache Weise eine kombinierte und somit zeitgleiche Messung eines Konturparameters einerseits und der Dicke einer Oxidschicht andererseits. Dabei ist die Meßeinrichtung derart ausgestaltet, daß die Tastspitze des Meßkopfes in mechanischem Kontakt am zu untersuchenden Objekt entlang führbar ist. Ein für die Kontur des zu untersuchenden Objekts charakteristische Meßwert kann dabei anhand der Auslenkung des Tastarms ermittelt werden, wobei die in den Meßkopf integrierte Schichtdickenmeßsonde gleichzeitig einen Meßwert für die Dicke der Oxidschicht an eben dieser Stelle liefert.

Dabei ist auf besonders einfache Weise eine zuverlässige Ermittlung der Auslenkung des Tastarms ermöglicht, indem dieser vorteilhafterweise am Trägerkörper über ein Knickgelenk befestigt ist, dem ein Sensor zur Erfassung seines Knickwinkels zugeordnet ist. Aufgrund der geometrischen Verhältnisse ist dabei aus dem Knickwinkel in eindeutiger Weise ein Kennwert für die jeweilige seitliche Auslenkung des Meßkopfs ableitbar.

Die Meßeinrichtung ist mit besonders geringem Aufwand, insbesondere an Material, herstellbar, indem der Tastarm vorteilhafterweise als auslenkbares Federblech ausgestaltet ist.

In besonders vorteilhafter Weiterbildung ist am Tastarm der Meßeinrichtung ein Dehnungsmeßstreifen angeordnet. Über den Dehnungsmeßstreifen kann dabei mit vergleichsweise hoher Genauigkeit ein für die laterale Ausdehnung der Oberfläche des Tastarms charakteristisches Meßsignal bereitgestellt werden. Dieses läßt mit besonders hoher Auflösung einen zuverlässigen Rückschluß auf die entsprechende Auslenkung des Tastarms an seinem freien Ende zu. Insbesondere in Kombination mit dem Knickgelenk, dessen Knickwinkel erfaßbar ist, ist dabei eine kombinierte Fein- und Grobmessung der Auslenkung des Tastarms ermöglicht, die einerseits eine vergleichsweise hochauflösende Messung mit großem Meßbereich oder andererseits eine redundante und somit besonders exakte Messung der Auslenkung in einem vergleichsweise geringen Meßbereich ermöglicht.

Eine Anzahl derartiger Meßeinrichtungen kommt in besonders vorteilhafter Ausgestaltung bei einem Brennstabprüfgerät oder bei einem Prüfgerät für einen Brennelementkasten oder einen Abstandshalter eines Brennelements zum Einsatz. In einem Brennstabprüfgerät ist dabei zweckmäßigerweise eine Anzahl derartiger Meßeinrichtungen vorgesehen, wobei ein den Meßeinrichtungen gemeinsamer Trägerkörper auf einer Anzahl von an einem Brennstab entlangführbaren Führungsrollen gelagert ist.

Die mit der Erfindung erzielten Vorteile bestehen insbesondere darin, daß durch die kombinierte Anbringung geeigneter Meßmittel sowohl für die Ermittlung eines Konturparameters, beispielsweise als Grundlage für die Bestimmung eines Durchmesserkennwerts, als auch für die Ermittlung eines Meßwerts für die Dicke der Oxidschicht eine gleichzeitige Messung dieser Parameter, die überdies auch noch dem gleichen räumlichen Bereich des Meßobjekts repräsentiert, ermöglicht ist. Der für die Durchführung der zur Charakterisierung eines Brennstabs oder Abstandshalters erforderlichen Messungen benötigte zeitliche und logistische Aufwand ist somit besonders gering gehalten. Damit ist auch bei vergleichsweise geringfügigen Eingriffen in den Betriebsablauf der kerntechnischen Anlage und insbesondere in vergleichsweise kurzer Meßzeit ein besonders umfangreicher und somit für den allgemeinen Zustand der untersuchten Komponenten besonders charakteristischer Datensatz bereitstellbar. Darüberhinaus wird auch für die Bereitstellung des vollständigen Datensatzes lediglich eine einzige Gattung von Meßeinrichtungen benötigt, so daß auch hierfür der logistische Aufwand und insbesondere die Ersatzteilvorhaltung besonders einfach gehalten ist. Gerade bei der Anordnung der Spulenanordnung direkt hinter der Tastspitze erfolgt die Ermittlung der Daten zudem in einer Spur oder Linie, so daß Korrelationen zwischen der Kontur und der Dicke der Oxidschicht auf besonders einfache Weise in der Auswertung berücksichtigt werden können.

Ein Ausführungsbeispiel wird anhand einer Zeichnung näher erläutert. Darin zeigen:
- Fig. 1: einen an einem Tastarm angeordneten Meßkopf im Schnitt in Draufsicht,
- Fig. 2: schematisch ein Brennstabprüfgerät in Seitenansicht,
- Fig. 3: schematisch das Brennstabprüfgerät gemäß Fig. 2 in Draufsicht, und
- Fig. 4: schematisch eine Vermessungseinrichtung für einen Abstandhalter in Draufsicht.

Gleiche Teile sind in allen Figuren mit denselben Bezugszeichen versehen.

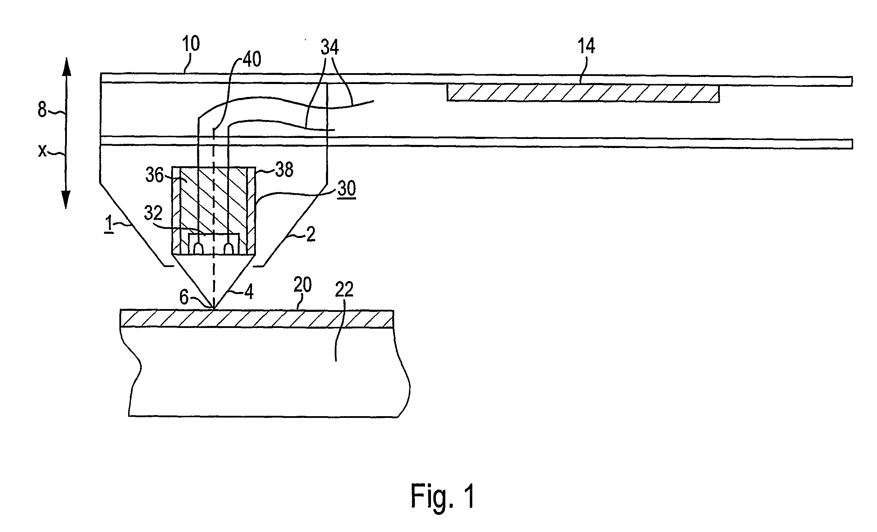

Der Meßkopf 1 gemäß Fig. 1 ist zur Vermessung eines Einbauteils, insbesondere eines Brennstabs eines Brennelementkastens, oder eines Abstandshalters eines Brennelements, in einer kerntechnischen Anlage vorgesehen. Dabei ist der Meßkopf 1 derart ausgebildet, daß in der Art einer kombinierten Messung sowohl die Ermittlung eines Kontur- oder Geometriekennwerts eines zu untersuchenden Objekts als auch die Ermittlung der Dicke einer Oxidschicht an der Oberfläche des zu untersuchenden Objekts gleichzeitig und in einem Meßvorgang ermöglicht ist.

Zur Ermittlung eines Kontur- oder Geometriekennwerts umfaßt der Meßkopf 1 ein Tastergehäuse 2, an dem eine Tastspitze 4 angeordnet ist. Die Tastspitze 4 ist aus Diamant gefertigt, kann aber auch mehrkomponentig mit einem Material mit geeignet gewählter Härte angefertigt sein. Zur Ermittlung eines Kontur- oder Geometriekennwerts eines zu untersuchenden Objekts 7, bei dem es sich insbesondere um einen Brennstab oder um einen Abstandshalter in einem Brennelement handeln kann, ist die Tastspitze 4 dabei in mechanischem Kontakt am zu untersuchenden Objekt entlangführbar, wobei eine Kontur- oder Geometrieänderung an der Oberfläche des zu untersuchenden Objekts zu einer Lageänderung der Tastspitze 4 und somit des Meßkopfs 1 insgesamt in der durch den Doppelpfeil 8 angedeuteten Richtung x resultiert. Zur Bereitstellung eines charakteristischen Meßwerts für eine derartige Positionsänderung ist der Meßkopf 1 am freien Ende 10 eines Tastarms 12 angeordnet. Der Tastarm 12 ist dabei seinerseits mit seinem anderen in Fig. 1 nicht näher dargestellten Ende geeignet an einer Trägervorrichtung befestigt. Im Ausführungsbeispiel gemäß Fig. 1 ist der Tastarm 12 als Federblech ausgestaltet. In diesem Fall führt eine Auslenkung des freien Endes 10 des Tastarms 12 infolge einer Positionsänderung des Meßkopfs 1 in der Meßrichtung x zu einer Biegung oder Verformung des Federblechs. Diese ist quantitativ über einen an der Oberfläche des Tastarms 12 montierten Dehnungsmeßstreifen 14 erfaßbar. Mit einer derartigen Anordnung sind somit auch vergleichsweise kleine Positionsänderungen des Meßkopfs 1 in Richtung x mit hoher Auflösung erfaßbar. Alternativ oder zusätzlich kann der Tastarm 12 auch mit einem Knickgelenk versehen sein, dessen Knickwinkel mit einem geeigneten Knickwinkelsensor erfaßbar ist. Eine Positionsbestimmung des Meßkopfs 1 in Richtung x kann in diesem Fall durch eine kombinierte Auswertung von Meßwerten des Dehnungsmeßstreifens 14 und des Knickwinkelsensors erfolgen.

Der solchermaßen zur Bereitstellung eines Kontur- oder Geometriekennwerts geeignete Meßkopf 1 ist darüberhinaus auch noch für eine Messung der Dicke einer Oxidschicht 20 an der Oberfläche eines zu untersuchenden Objekts 7 ausgebildet, die von einem metallischen Grundmaterial des Objekts 7 getragen ist. Dazu ist in das Tastergehäuse 2 des Meßkopfs 1 eine Schichtdickenmeßsonde 30 integriert. Die Schichtdickenmeßsonde 30 umfaßt eine Spulenanordnung 32, die über durch das Tastergehäuse 2 und durch den Tastarm 12 geführte Signalleitungen 34 mit einem nicht näher dargestellten Wirbelstromdetektor verbunden ist. Die Spulenanordnung 32 ist dabei mittels einer Vergußmasse 36 in einer Trägerhülse 38 eingegossen, die ihrerseits im Tastergehäuse 2 befestigt ist. Die Spulenanordnung 32 ist dabei derart positioniert, daß sich ihre Symmetrie- oder Mittellinie mit der 6 der Tastspitze 4 deckt. Somit ist die Schichtdickenmeßsonde 30 innerhalb des Tastergehäuses 2 hinter der Tastspitze 4 angeordnet.

Die Schichtdickenmeßsonde 30 ist zur Bestimmung der Dicke der Oxidschicht 20 auf der Grundlage des sogenannten "Lift-Off-Effekts" ausgebildet. Dazu ist die Spulenanordnung 32 zur Bereitstellung eines Wirbelstromdetektors eingangsseitig über eine Wheatstone'sche Brückenschaltung an einen Hochfrequenz-Generator angeschlossen. Der ausgangsseitige Teil der Brückenschaltung ist mittels eines Übertragers mit einem Wirbelstrommeßgerät verbunden. Zur Ermittlung der Schichtdicke der Oxidschicht 20 wird die Spulenanordnung 32 in eine definierte Position nahe bei der Oxidschicht 20 gebracht. Die definierte Position der Spulenanordnung 32 im Hinblick auf die Oxidschicht 20 ist dabei dadurch gewährleistet, daß die Spulenanordnung 32 aufgrund des festen Einbaus im Tastergehäuse 2 einen definierten und konstanten Abstand zur Vorderkante der Tastspitze 4 einnimmt. Die Tastspitze 4 wiederum wird - nicht zuletzt zur Durchführung der Konturmessung - in unmittelbaren mechanischen Kontakt mit der Oberfläche der Oxidschicht 20 gebracht, so daß automatisch eine exakte Positionierung der Spulenanordnung 32 im Verhältnis zur Oberfläche der Oxidschicht 20 gegeben ist.

Bei der Messung der Schichtdicke der Oxidschicht 20 wird die Spulenanordnung 32 mit einem hochfrequenten Eingangssignal bespeist. Durch das durch die solchermaßen betriebene Spulenanordnung 32 generierte Magnetfeld wird in der die Oxidschicht 20 tragenden metallischen Grundmaterial 22 des Objekts 7 ein Wirbelstrom erzeugt, der seinerseits eine Rückwirkung auf die Impedanz der Spulenanordnung 32 hervorruft. Die Größe dieser Rückwirkung ist dabei abhängig vom Abstand der metallischen Trägerschicht 22 von der Spulenanordnung 32. Dieser Abstand ist seinerseits gegeben durch die Summe aus dem Abstand der Spulenanordnung 32 von der Vorderkante der Tastspitze 4 und aus der Dicke der Oxidschicht 20. Die für den Betrieb der Spulenanordnung 32 eingesetzte Brückenschaltung liefert somit als Ausgangssignal ein Spannungssignal, das seinerseits für die Dicke der Oxidschicht 20 charakteristisch ist und somit für diese auswertbar ist.

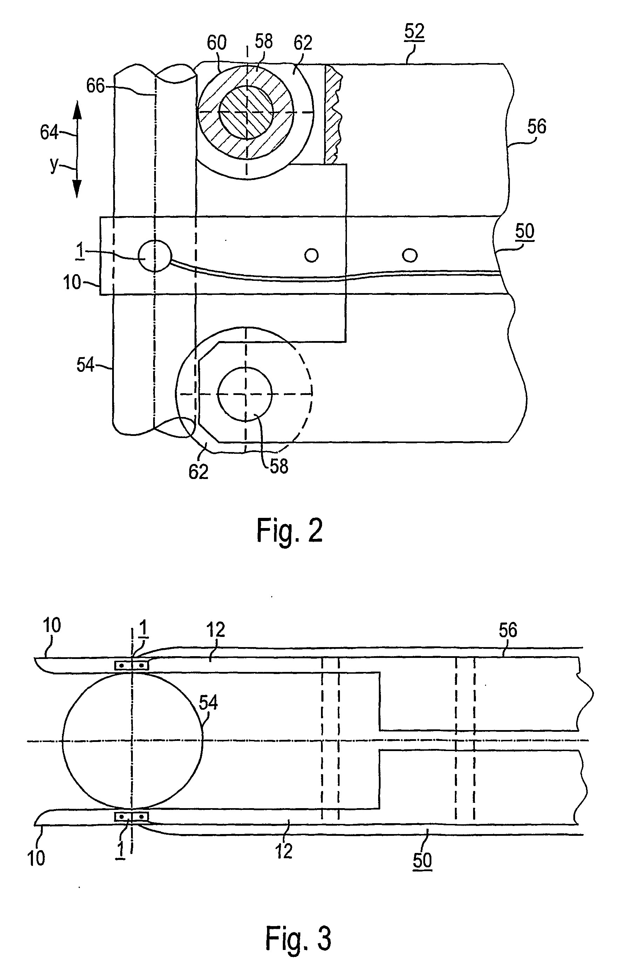

Der Meßkopf 1 eignet sich somit für die zeitgleiche Ermittlung der Kontur einerseits und der Dicke einer oberflächlichen Oxidschicht 20 des zu untersuchenden Objekts 7 andererseits. Somit kann der Meßkopf 1 in besonders vorteilhafter Weise für eine zeitsparende Vermessung von Einbauteilen, insbesondere von Brennstäben, Brennelementkästen, Abstandshaltern oder anderen Strukturteilen in einer kerntechnischen Anlage zum Einsatz kommen, um deren Alterungszustand oder zu erwartende Restlebensdauer zuverlässig abschätzen zu können. Dazu kann der Meßkopf 1, wie dies schematisch und in Seitenansicht in Fig. 2 und in Draufsicht in Fig. 3 gezeigt ist, in einer Meßeinrichtung 50 zum Einsatz kommen, die ihrerseits wiederum Teil eines Brennstabprüfgeräts 52 ist. Die Meßeinrichtung 50 nach den Figuren 2 und 3 umfaßt dabei zwei Tastarme 12, an deren freiem, seitlich auslenkbarem Ende 10 jeweils einer der Meßköpfe 1 angeordnet ist. Die Tastarme 12 sind dabei, wie dies besonders aus Fig. 3 in Draufsicht erkennbar ist, gabelartig einander gegenüberliegend angeordnet und somit zum Umgreifen eines zwischen ihnen geführten, zu überprüfenden Brennstabs 54 geeignet. Die Meßköpfe 1 sind dabei einander gegenüberliegend angeordnet, so daß eine beidseitige Abtastung des Brennstabs 54 ermöglicht ist. Aufgrund dieser gegenüberliegenden Meßanordnung der Meßköpfe 1 ist die Ermittlung eines Kennwerts für den Durchmesser des Brennstabs 54 ermöglicht.

Die Tastarme 12 sind an einem gemeinsamen Trägerkörper 56 angeordnet, der seinerseits auf einer Anzahl von am Brennstab 54 entlangführbaren Führungsrollen 58 gelagert ist. Die Führungsrollen 58 umfassen dabei jeweils einen zentralen Rollkörper 60, der beidseitig jeweils von einer Führungsscheibe 62 begrenzt ist. Die Führungsscheiben 62 weisen dabei einen im Vergleich zum Durchmesser des Rollkörpers 60 größeren Durchmesser auf. Ein auf der Oberfläche des Brennstabs 54 abrollender Rollkörper 60 ist somit durch die ihn begrenzenden Führungsscheiben 62 automatisch relativ zum zu untersuchenden Brennstab 54 zentriert.

Das Brennstabprüfgerät 52 und mit diesem dessen Meßeinrichtung 50 ist über eine nicht näher dargestellte Antriebsvorrichtung in der durch den Doppelpfeil 64 angedeuteten Längsrichtung y des Brennstabs 54 an diesem entlang verfahrbar. Dadurch kann bedarfsweise eine Abtastung des Brennstabs 54 entlang seiner Längsrichtung y erfolgen. Durch diese Abtastung werden einerseits in der Art einer Profilmessung Konturmeßwerte anhand der Tastspitzen 4 der Meßköpfe 1 bereitgestellt, die wiederum in positionsabhängige Durchmesserkennwerte für den Brennstab 54 umsetzbar sind. Diese Abtastung erfolgt dabei entlang einer durch die Linie 66 angedeuteten Tastspur. Weiterhin werden bei der Abtastung durch die Schichtdickenmeßsonden 30 der Meßköpfe 1 positionsabhängige Kennwerte für die Dicke einer den Brennstab 54 möglicherweise umgebenden Oxidschicht bereitgestellt. Die entsprechenden Meßwerte werden dabei aufgrund der Positionierung der jeweiligen Spulenanordnung 32 direkt über der jeweiligen Tastspitze 4 ebenfalls entlang der Tastspur 66 aufgenommen. Durch ein derartiges im Hinblick auf beide relevanten Parameter gleichzeitig erfolgendes Abtasten des Brennstabs 54 wird somit einerseits in vergleichsweise kurzer Meßzeit ein besonders umfangreicher Datensatz für den Brennstab 54 bereitgestellt, wobei andererseits aufgrund der lokalen Übereinstimmung der jeweiligen Meßparameter auch etwaige Korrelationen zwischen der lokalen Schichtdicke der Oxidschicht und dem lokalen Durchmesserwert des Brennstabs 54 auswertbar sind.

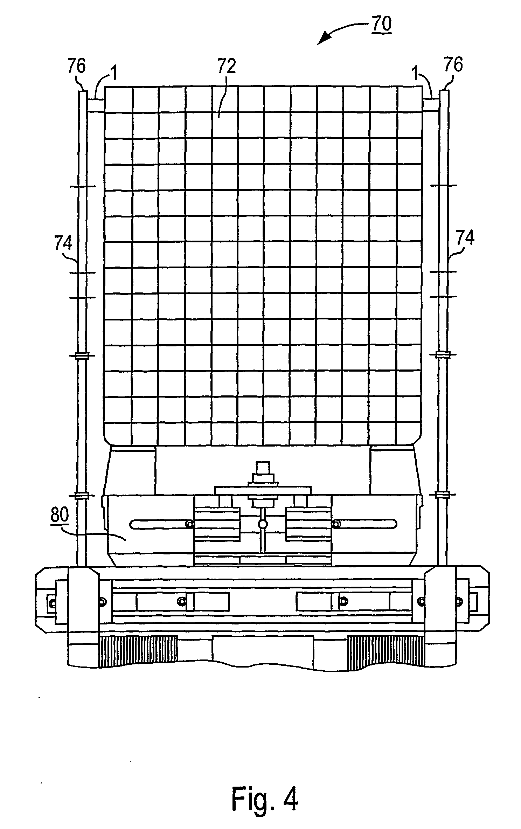

Alternativ kann der Meßkopf 1 auch in einer Vermessungseinrichtung 70 für einen Abstandhalter 72 eines Brennelements zum Einsatz kommen, wie dies schematisch in Fig. 4 in Draufsicht gezeigt ist. Die Vermessungseinrichtung 70 nach Fig. 4 umfaßt dabei ebenfalls zwei Tastarme 74, an deren freiem, seitlich auslenkbarem Ende 76 jeweils einer der Meßköpfe 1 angeordnet ist. Auch bei dieser Vermessungseinrichtung 70 sind die Tastarme 74 gabelartig einander gegenüberliegend angeordnet und somit zum Umgreifen des zwischen ihnen geführten, zu überprüfenden Abstandhalters 72 geeignet. Die Tastarme 74 der Vermessungseinrichtung 70 sind an einer Führungs- und Vorschubeinheit 80 als gemeinsamem Trägerkörper mit deren üblicherweise vorgesehenen Bauteilen angeordnet.

### Bezugszeichenliste

- 1: Meßkopf
- 2: Tastergehäuse
- 4: Tastspitze
- 6: Spitze
- 7: zu untersuchendes Objekt
- 8: Doppelpfeil
- 10: freies Ende
- 12: Tastarm
- 14: Dehnungsmeßstreifen
- 20: Oxidschicht
- 22: Trägerschicht
- 30: Schichtdickenmeßsonde
- 32: Spulenanordnung
- 34: Signalleitungen
- 36: Vergußmasse
- 38: Trägerhülse
- 50: Meßeinrichtung
- 52: Brennstabprüfgerät
- 54: Brennstab
- 56: Trägerkörper
- 58: Führungsrollen
- 60: Rollkörper
- 62: Führungsscheiben
- 64: Doppelpfeil
- 66: Linie
- 70: Vermessungseinrichtung
- 72: Abstandhalter
- 74: Tastarme
- 76: freies Ende
- 80: Führungs- und Vorschubeinheit

- x: Richtung
- y: Längsrichtung

## Patentansprüche

1. Brennstabprüfgerät (52) mit einer Anzahl von Messeinrichtungen (50) mit jeweils einem an einem Trägerkörper (56) angeordneten Tastarm (12), der an einem freien, seitlich auslenkbaren Ende (10) einen Messkopf (1) mit einer an einem Tastergehäuse (2) angeordneten Tastspitze (4) trägt, bei dem in das Tastergehäuse (2) eine Schichtdickenmeßsonde (30) integriert ist, wobei ein den Messeinrichtungen (50) gemeinsamer Trägerkörper (56) auf einer Anzahl von an einem Brennstab (54) entlang führbaren Führungsrollen (58) gelagert ist.

2. Brennstabprüfgerät (52) nach Anspruch 1, dessen Schichtdickenmeßsonde (30) eine mit einem Wirbelstromdetektor verbundene Spulenanordnung (32) umfasst.

3. Brennstabprüfgerät (52) nach Anspruch 1 oder 2, bei dem die Schichtdikkenmeßsonde (30) innerhalb des Tastergehäuses (2) hinter der Tastspitze (4) angeordnet ist.

4. Brennstabprüfgerät (52) nach einem der Ansprüche 1 bis 3, dessen Tastspitze (4) aus Diamant gefertigt ist.

5. Brennstabprüfgerät (52) nach einem der Ansprüche 1 bis 4, bei dem der Tastarm (12) am Trägerkörper (56) über ein Knickgelenk befestigt ist, dem ein Sensor zur Erfassung seines Knickwinkels zugeordnet ist.

6. Brennstabprüfgerät (52) nach einem der Ansprüche 1 bis 5, bei dem der Tastarm (12) als auslenkbares Federblech ausgestaltet ist.

7. Brennstabprüfgerät (52) nach einem der Ansprüche 1 bis 6, bei dem am Tastarm (12) ein Dehnungsmeßstreifen (14) angeordnet ist.

8. Verwendung eines Brennstabprüfgeräts (52) nach einem der Ansprüche 1 bis 7 zur Prüfung eines Brennstabs (54), eines Brennelementkastens, eines Abstandshalters und/ oder eines sonstigen Strukturteils einer kerntechnischen Anlage.

## Claims

1. Fuel rod testing appliance (52) having a number of measuring devices (50), each with a sensing arm (12) which is arranged on a carrier body (56) and, at a free, laterally deflectable end (10), bears a measuring head (1) having a sensing tip (4) which is arranged on a sensor housing (2), wherein a layer thickness measuring probe (30) is integrated in the sensor housing (2), a carrier body (56) which is common to the measuring devices (50) being mounted on a number of guide rolls (58) which can be guided along a fuel rod (54).

2. Fuel rod testing appliance (52) according to Claim 1, the layer thickness measuring probe (30) of which comprises a coil arrangement (32) connected to an eddy current detector.

3. Fuel rod testing appliance (52) according to Claim 1 or 2, in which the layer thickness measuring probe (30) is arranged inside the sensor housing (2), behind the sensing tip (4).

4. Fuel rod testing appliance (52) according to one of Claims 1 to 3, the sensing tip (4) of which is made from diamond.

5. Fuel rod testing appliance (52) according to one of Claims 1 to 4, in which the sensing arm (12) is secured to the carrier body (56) via a bending joint which is assigned a sensor for recording its bending angle.

6. Fuel rod testing appliance (52) according to one of Claims 1 to 5, in which the sensing arm (12) is configured as a deflectable spring steel sheet.

7. Fuel rod testing appliance (52) according to one of Claims 1 to 6, in which a strain gauge (14) is arranged on the sensing arm (12).

8. Use of the fuel rod testing appliance (52) according to one of Claims 1 to 7 for testing a fuel rod (54), a fuel assembly channel, a spacer and/or another structural part of a nuclear engineering installation.

## Revendications

1. Appareil (52) de contrôle d'un crayon combustible, comprenant un certain nombre de dispositifs (50) de mesure, ayant respectivement un bras (12) palpeur monté sur un corps (56) servant de support et portant à une extrémité (10) libre, pouvant se déployer latéralement, une tête (1) de mesure ayant une pointe (4) de palpage montée sur un boîtier (2) de palpeur, dans lequel une sonde (30) de mesure d'épaisseur de couche est incorporée au boîtier (2) de palpeur, un corps (56)servant de support commun aux dispositifs (50) de mesure étant monté sur un certain nombre de galets (58) de guidage pouvant être guidés le long d'un crayon (54) combustible.

2. Appareil (52) de contrôle d'un crayon combustible suivant la revendication 1, dont la sonde (30) de mesure d'une épaisseur de couche comprend un dispositif (32) à bobine relié à un détecteur de courants de Foucault.

3. Appareil (52) de contrôle d'un crayon combustible suivant la revendication 1 ou 2, dans lequel la sonde (30) de mesure de l'épaisseur de couche est disposée à l'intérieur du boîtier (2) de palpeur derrière la pointe (4) de palpage.

4. Appareil (52) de contrôle d'un crayon combustible suivant l'une des revendications 1 à 3, dont la pointe (4) de palpage est en diamant.

5. Appareil (52) de contrôle d'un crayon combustible suivant l'une des revendications 1 à 4, dans lequel le bras (12) de palpage est fixé au corps (56) servant de support par une genouillère à laquelle est associé un capteur de détection de son angle de coudage.

6. Appareil (52) de contrôle d'un crayon combustible suivant l'une des revendications 1 à 5, dans lequel le bras (12) de palpage est conformé en tôle élastique pouvant se déployer.

7. Appareil (52) de contrôle d'un crayon combustible suivant l'une des revendications 1 à 6, dans lequel il est monté une jauge de contrainte (14) sur le bras (12) de palpage.

8. Utilisation d'un appareil (52) de contrôle d'un crayon combustible suivant l'une des revendications 1 à 7 pour le contrôle d'un crayon (54) combustible d'un boîtier canal d'assemblage combustible d'une entretoise et/ou d'une autre partie de structure d'une installation de génie nucléaire.
